# Europäisches Patentamt

# European Patent Office

# Office européen des brevets

(19)

(11) Numéro de publication: **0 161 149 B1**

(12)

# FASCICULE DE BREVET EUROPEEN

(45) Date de publication du fascicule du brevet:
**13.07.88**

(51) Int. Cl.⁴: **F 16 L 23/00**, F 16 J 15/02

(21) Numéro de dépôt: **85400637.6**

(22) Date de dépôt: **01.04.85**

(54) Dispositif de racccordement étanche.

(30) Priorité: **05.04.84 FR 8405380**

(43) Date de publication de la demande:
**13.11.85 Bulletin 85/46**

(45) Mention de la délivrance du brevet:
**13.07.88 Bulletin 88/28**

(84) Etats contractants désignés:
**BE CH DE FR GB IT LI NL SE**

(56) Documents cités:
**FR - A - 993 123**
**FR - A - 1 583 060**
**FR - A - 2 232 235**
**US - A - 1 985 475**
**US - A - 2 291 709**

(73) Titulaire: **COMMISSARIAT A L'ENERGIE ATOMIQUE,
31/33, rue de la Fédération, F-75015 Paris (FR)**

(72) Inventeur: **Abbes, Claude, Les Primevères 5 Montée du
Crêt du Loup, F-42100 Saint Etienne (FR)**
Inventeur: **de Villepoix, Raymond, La Chatelière,
F-26290 Donzere (FR)**
Inventeur: **Rouaud, Christian, 19, Les Genêts,
F-07700 Bourg Saint Andeol (FR)**

(74) Mandataire: **Mongrédien, André et al, c/o
BREVATOME 25, rue de Ponthieu, F-75008 Paris (FR)**

# Description

La présente invention se rapporte à un dispositif de raccordement étanche, notamment entre deux tuyauteries ou entre un récipient et son couvercle, du type comprenant un joint métallique flexible placé entre deux brides en vis-à-vis, reliées par des moyens de serrage, le joint métallique flexible comportant une âme métallique creuse présentant une forme annulaire et au moins une enveloppe dans laquelle est encastrée l'âme métallique.

Dans les joints métalliques utilisés dans de tels dispositifs, l'âme métallique élastique est constituée soit par un tube métallique, soit par un ressort hélicoïdal à spires jointives refermé sur lui-même. Dans ce dernier cas, la section du fil constituant le ressort peut être de forme variée et notamment ronde, rectangulaire ou en segment de cercle. Le tube ou le ressort hélicoïdal, serré sur champ, confère au joint son élasticité.

D'autre part, la ou les enveloppes entourant l'âme de ces joints sont constituées de matériaux plaqués ou en feuilles minces tels que le polytétrafluoréthylène, l'aluminium, l'argent, le cuivre, le nickel, le tantale, l'acier inoxydable, le zirconium, etc...

Lorsque les joints métalliques flexibles comprennent plusieurs enveloppes, celles-ci ont chacune un rôle particulier. Ainsi, lorsque l'âme du joint est constituée par un ressort à spires jointives, l'enveloppe interne a en général un rôle de répartition de charge au niveau de chaque sommet de spire de l'âme élastique. L'enveloppe externe est réalisée quant à elle en un métal ductile permettant, grâce à ses capacités de fluage dans les aspérités des surfaces en contact, de conférer au joint une parfaite étanchéité lorsqu'il est serré dans un assemblage. D'une manière générale, ce sont donc les propriétés plastiques des matériaux qui les constituent qui caractérisent les enveloppes du joint.

On remarquera en outre que les joints métalliques existants sont très généralement de forme torique, les enveloppes qui enserrent l'âme élastique ayant également la forme d'une surface torique dont le cercle générateur ne se referme pas sur lui-même. Il peut s'agir d'un tore de révolution si le joint est de forme circulaire. Toutefois, le joint peut aussi prendre toute autre forme et notamment une forme rectangulaire, ovale, carrée, en haricot, etc...

Une illustration d'un joint métallique, tel qu'exposé dans le préambule de la revendication 1, existant dont l'âme élastique est constituée par un ressort hélicoïdal à spires jointives est donnée par le document FR-A-2 232 235.

Ces joints sont habituellement utilisés dans des assemblages constitués de deux brides plates ou possédant une gorge de section rectangulaire destinée à recevoir le joint. Dans ces conditions, le comportement des joints métalliques existants est parfaitement satisfaisant.

Comme l'illustre en particulier le document FR-A-1 583 060, il existe toutefois certaines applications, notamment en pétrochimie, dans lesquelles des joints doivent être placés dans des gorges de section trapézoïdale formées dans des brides en vis-à-vis. Dans ce cas, les joints doivent assurer à la fois l'étanchéité entre les brides et le centrage relatif entre ces brides. De plus, les conditions de fonctionnement sont généralement très difficiles, notamment en ce qui concerne la température et la pression, qui sont très élevées.

L'utilisation dans ces assemblages des joints métalliques flexibles existants à section circulaire est aléatoire et non satisfaisante, en particulier en raison de la profondeur relativement importante des gorges par rapport à leur largeur.

On connnaît par ailleurs du document US-A-1 985 475 un joint métallique flexible de section ovale, conçu notamment pour résister à la pression élevée régnant dans les moteurs à combustion interne.

Un tel joint ne peut cependant pas être utilisé sans difficulté dans un assemblage tel que celui qui est décrit dans le document FR-A-1 583 060. En effet, si certaines conditions mises en lumière par l'invention ne sont pas respectées, le serrage de l'assemblage conduit au glissement et au laminage des enveloppes entourant l'âme du joint. L'ovale du joint se trouve alors déformé, de sorte que le joint est fragilisé et ne peut en aucun cas être réutilisé.

La présente invention a précisément pour objet un dispositif de raccordement étanche comprenant un joint métallique flexible de section ovale placé dans des gorges de section trapézoïdale en vis-à-vis, ne présentant pas les inconvénients qui viennent d'être mentionnés, tout en permettant de bénéficier des avantages procurés par les joints métalliques flexibles existants.

A cet effet, il est proposé conformément à l'invention un dispositif de raccordement étanche comprenant un joint métallique flexible placé entre deux brides en vis-à-vis reliées par des moyens de serrage, le joint comprenant au moins une âme métallique élastique creuse présentant une forme annulaire, et au moins une enveloppe dans laquelle est encastré l'âme métallique, caractérisé en ce que l'âme métallique du joint présente au repos une section ovale dont l'un des axes de symétrie est situé dans le plan de symétrie du joint, les brides présentant au moins deux gorges trapézoïdales en vis-à-vis dans lesquelles le joint est logé de façon à être en contact étanche avec les flancs desdites gorges en quatre zones et à être en butée avec le fond desdites gorges en deux zones lorsque lesdits moyens de serrage sont actionnés.

De préférence, avant l'actionnement desdits moyens de serrage, ledit joint est espacé du fond de chacune desdites gorges d'une distance comprise entre 0,5 mm et 1 mm.

Selon deux variantes de réalisation possibles de l'invention, l'axe de symétrie de l'ovale formé en section par l'âme métallique du joint et situé dans le plan de symétrie du joint peut être soit le petit axe, soit le grand axe de l'ovale.

Selon un mode de réalisation particulier de l'invention, le joint comprend de plus un jonc annulaire plein disposé à l'intérieur de l'âme élastique et servant de limiteur d'écrasement et/ou de renfort métallique.

En plus des assemblages à une ligne d'étanchéité, l'invention couvre également les assemblages à deux lignes d'étanchéité dans lesquels l'une au moins des enveloppes du joint se prolonge parallèlement au plan de symétrie du joint pour supporter une deuxième âme élastique qui peut être soit une âme métallique identique à la première, soit un joint non métallique par exemple en élastomère.

On décrira maintenant différents modes de réalisation de l'invention en se référant aux dessins annexés dans lesquels:

– la figure 1 est une vue en coupe longitudinale représentant un assemblage ou dispositif de raccordement étanche comportant, conformément à l'invention, un joint métallique flexible de section ovale logé dans deux gorges trapézoïdales en vis-à-vis, ce dispositif étant représenté avant son serrage sur la moitié gauche de la figure et après son serrage sur la moitié droite,

– les figures 2a et 2b sont des demi-vues en coupe diamétrale du joint métallique flexible illustrant deux variantes d'un premier mode de réalisation de l'invention selon lequel les enveloppes du joint sont ouvertes selon le grand axe de l'ovale défini en section par le joint,

– les figures 3a et 3b sont des vues comparables aux figures 2a et 2b illustrant deux variantes d'un deuxième mode de réalisation de l'invention dans lesquelles les enveloppes du joint sont ouvertes selon le petit axe de l'ovale défini en section par le joint,

– la figure 4 est une vue comparable aux figures 2 et 3 illustrant un autre mode de réalisation de l'invention selon lequel un jonc annulaire plein est disposé à l'intérieur de l'âme élastique du joint,

– la figure 5 est une vue comparable aux figures 2 et 4 illustrant un autre mode de réalisation de l'invention dans lequel le joint comporte deux lignes d'étanchéité, et

– la figure 6 est une vue en demi-coupe partielle d'un dispositif de raccordement étanche selon l'invention, comportant un joint dans lequel le grand axe de l'ovale formé en section par le joint est situé dans le plan de symétrie du joint.

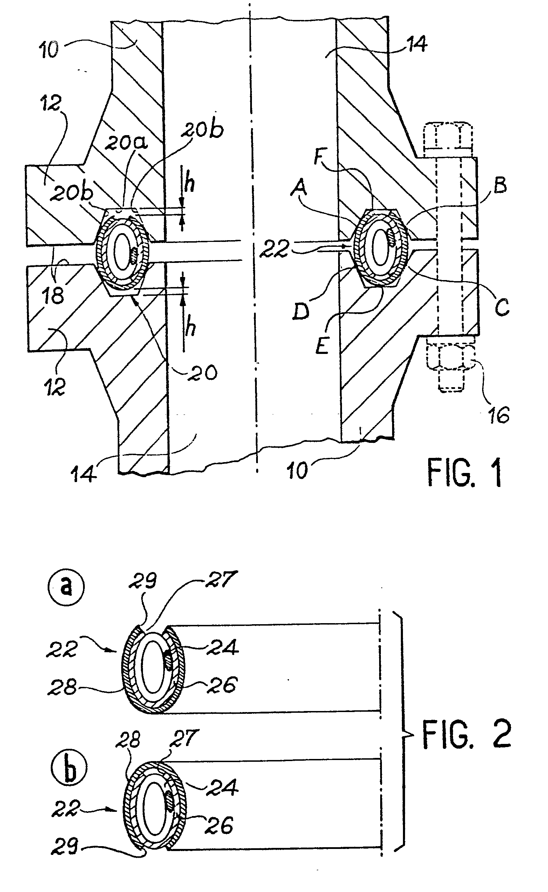

L'assemblage représenté sur la figure 1, qui constitue le dispositif de raccordement étanche selon l'invention, comprend deux brides 12 placées en vis-à-vis l'une de l'autre et soudées aux extrémités de deux conduites 10 à raccorder, de telle sorte que les passages 14 définis par chacune des conduites soient axialement alignés. L'assemblage proprement dit est réalisé par exemple à l'aide de tirants 16 traversant des trous circonférentiellement répartis sur chacune des brides 12. Bien entendu, tout autre moyen de fixation et de serrage connu peut être utilisé à la place des tirants 16.

Sur leurs faces 18 en vis-à-vis, chacune des brides 12 comporte une gorge 20, de section trapézoïdale, entourant le passage 14. On désigne par 20a le fond de la gorge et par 20b les flancs de celle-ci.

Un joint métallique flexible 22, de section ovale, est placé dans les gorges 20 en vis-à-vis et serré entre les brides 12 par les tirants 16.

L'un des axes (le petit sur la figure) de l'ovale défini en section par le joint 22 est situé dans le plan de symétrie du joint (perpendiculaire à l'axe commun des passages 14) et l'autre est perpendiculaire à ce plan.

La forme ovale présentée en section par le joint 22, ainsi que les dimensions de cet ovale sont choisies en fonction de la forme et des dimensions des gorges trapézoïdales 20, de telle sorte que l'étanchéité de l'assemblage soit réalisée en quatre zones pseudo-ponctuelles désignées par les références A, B, C et D sur la figure 1. De façon plus précise, ces zones A, B, C et D sont situées sur les flancs 20b des gorges 20, de telle sorte que la tangente à la surface externe du joint a une orientation sensiblement égale à celle des flancs inclinés 20b des gorges 20.

Avant le serrage des tirants 16 (voir la moitié gauche de la figure 1) les dimensions relatives du joint 22 et des gorges 20 sont telles que la distance $h$ séparant le joint du fond 20a de chacune des gorges soit comprise entre 0,5 mm et 1 mm.

Si on désigne par E l'écartement entre les brides 12 avant serrage et par L la profondeur des gorges, le grand axe (B) de l'ovale formé en section par le joint peut être calculé à l'aide de la formule suivante:

$$B = E + 2L - 2h$$

Après le serrage des tirants 16 (voir la moitié droite de la figure 1), l'étanchéité de l'assemblage est réalisée au niveau des quatre zones A, B, C et D. Toutefois, à ces quatre zones de contact entre le joint et les flancs des gorges s'ajoutent deux zones, désignées par les références E et F sur la figure 1, au niveau desquelles le joint est en contact avec le fond 10a des gorges. Compte tenu de la configuration du joint 20, ces zones E et F ne sont pas nécessairement des zones d'étanchéité.

Grâce aux dispositions qui viennent d'être décrites, le glissement possible en A, B, C et D entre le joint et les flancs des gorges au cours du serrage et avant contact en E et F est limité à quelques dixièmes de millimètres, de sorte que l'efficacité du joint est préservée.

On décrira maintenant plus en détail différents modes de réalisation possibles du joint 22, en se référant aux figures 2 à 6.

De façon en soi classique pour un joint métallique flexible de ce type, le joint 22 comprend une âme constituée par un ressort hélicoïdal métallique 24 à spires jointives refermé sur lui-même, ce ressort étant encastré dans une première enveloppe 26, elle-même encastrée dans une seconde enveloppe 28, constituant l'enveloppe externe du joint.

Conformément à l'invention, la forme ovale présentée en section par le joint 22 est obtenue en donnant au ressort 24 constituant l'âme du joint une forme ovale.

Les enveloppes 26 et 28 sont ensuite mises en place respectivement sur le ressort 24 et sur l'enveloppe 26.

Dans le mode de réalisation de la figure 2a, comme dans les modes de réalisation illustrés sur les figures 2b, 3a, 3b, 4 et 5, le petit axe de l'ovale formé en section par le joint est situé dans le plan de symétrie radial de celui-ci, alors que le grand axe de l'ovale est perpendiculaire à ce plan et, par conséquent, parallèle à l'axe du joint lorsque celui-ci est de révolution.

De façon classique pour des joints métalliques flexibles, les enveloppes 26 et 28 sont ouvertes en 27 et 29.

De façon plus précise, sur les figures 2a et 2b, ces deux enveloppes sont ouvertes en 27 et 29 selon le grand axe de l'ovale défini en section par le joint. La variante de la figure 2a se distingue de celle de la figure 2b par le fait que sur la figure 2a, les enveloppes 26 et 28 sont toutes deux ouvertes d'un même côté du joint, alors qu'elles sont ouvertes sur les deux côtés opposés dans le cas de la figure 2b.

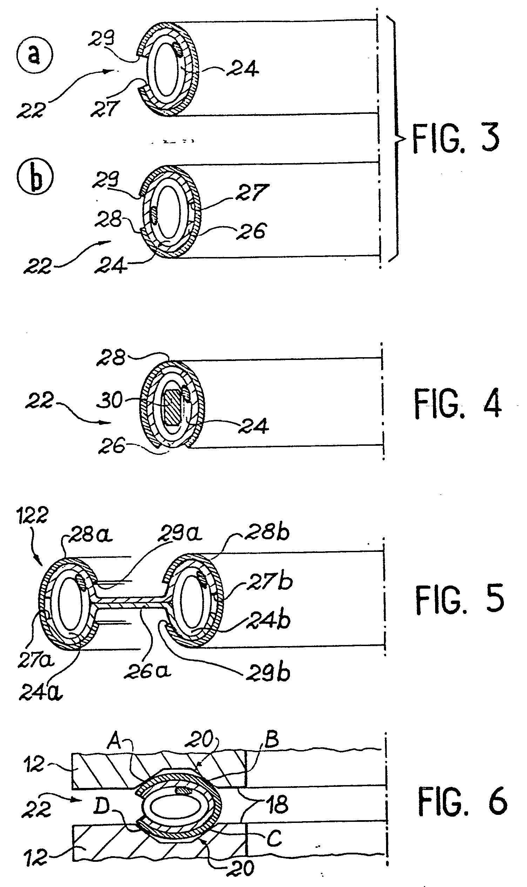

A l'inverse, les figures 3a et 3b illustrent deux variantes de réalisation du joint selon l'invention dans lesquelles les enveloppes 26 et 28 sont ouvertes en 27 et 29 selon le petit axe de l'ovale défini en section par le joint. De façon plus précise, la figure 3a illustre le cas où les deux enveloppes sont ouvertes selon la périphérie externe du joint, alors que la figure 3b illustre le cas où les deux enveloppes sont ouvertes selon les périphéries interne et externe du joint, respectivement.

La figure 4 montre un autre mode de réalisation de l'invention, dans lequel le joint 22 comprend de plus, à l'intérieur du ressort hélicoïdal à spires jointives 24, un jonc plein 30. Ce jonc 30, qui présente sur la figure 4 une section sensiblement rectangulaire à arêtes biseautées, peut servir de limiteur d'écrasement du joint et/ou simplement de renfort métallique pour celui-ci.

Sur la figure 4, on a représenté le cas où un jonc 30 est placé dans un joint identique à celui de la figure 2b. Il ne s'agit bien entendu que d'un exemple de réalisation non limitatif. On conçoit en effet qu'un jonc plein pourrait aussi bien être disposé dans les joints représentés sur les figures 2a, 3a et 3b.

Bien entendu, l'invention n'est pas limitée aux dispositifs à une ligne d'étanchéité et couvre également les dispositifs à deux lignes d'étanchéité. Ainsi, on a représenté à titre d'exemple sur la figure 5 un joint 122 comportant deux ressorts hélicoïdaux fermés à spires jointives 24a et 24b, de section ovale, présentant un plan de symétrie commun contenant les petits axes des ovales définis en section par chacun des ressorts. Une entretoise 26a est placée entre les ressorts 24a et 24b selon ce plan de symétrie et constitue en même temps la première enveloppe de chacun des ressorts. Cette première enveloppe s'ouvre en 27b selon la périphérie externe du ressort externe 24a. De plus, une deuxième enveloppe 28a et 28b est placée sur la partie de l'entretoise 26a enveloppant respectivement les ressorts 24a et 24b. Ces enveloppes 28a et 28b s'ouvrent en vis-à-vis l'une de l'autre, c'est-à-dire en 29a selon la périphérie interne du ressort 24a pour l'enveloppe 28a et en 29b selon la périphérie externe du ressort 24b pour l'enveloppe 28b.

Bien entendu, cette description du joint 122 qui vient d'être faite en se référant à la figure 5 n'est pas limitative et on comprendra que toute autre réalisation d'un joint à deux lignes d'étanchéité comprenant au moins un joint métallique flexible de section ovale est couverte par l'invention. En particulier, les différents modes de réalisation des figures 2a à 4 peuvent être utilisés pour modifier le joint de la figure 5. De plus, il est à noter que l'une des deux lignes d'étanchéité du joint peut être réalisée à l'aide d'un joint non métallique et notamment d'un joint en un matériau élastomère.

Bien entendu le joint 122 à deux lignes d'étanchéité de la figure 5 est placé dans un assemblage comprenant deux brides comportant chacune deux gorges de section trapézoïdale aptes à recevoir les deux parties du joint.

Enfin, on a représenté à titre d'exemple sur la figure 6 un autre mode de réalisation possible du dispositif selon l'invention qui diffère des modes de réalisation précédemment décrits par le fait que, dans ce cas, c'est le grand axe de l'ovale présenté en section par le joint qui est contenu dans le plan de symétrie de celui-ci. Comme l'illustre la figure 6, un tel joint est particulièrement adapté au cas où les gorges trapézoïdales 20 formées dans les brides 12 sont relativement évasées et de profondeur relativement faible. Ici encore, les quatre zones de contact A, B, C et D entre le joint et les flancs des gorges sont telles qu'à ce niveau les tangentes à la surface externe du joint présentent des directions sensiblement identiques à celles des flancs des gorges trapézoïdales 20. De plus, la distance $\underline{h}$ séparant le joint 22 du fond des gorges 20 avant serrage est comprise entre 0,5 mm et 1 mm, de telle sorte que le serrage de l'assemblage a pour effet d'amener le joint en contact avec le fond des gorges sans déformation importante du joint.

Tous les modes de réalisation décrits précédemment en se référant aux figures 2 à 5 s'appliquent à ce mode de réalisation de la figure 6. En particulier, l'ouverte des enveloppes du joint peut se faire de l'une quelconque des manières décrites en se référant aux figures 2 et 3, un jonc plein peut être placé à l'intérieur du ressort hélicoïdal conformément au mode de réalisation de la figure 4, et un tel joint peut également permettre d'assurer deux lignes d'étanchéité comme on l'a décrit en se référant à la figure 5.

Bien entendu, toutes les variantes connues des joints métalliques flexibles existants peuvent s'appliquer avantageusement aux joints métalliques flexibles utilisés dans le dispositif selon l'invention. Ainsi, il importe peu que le joint comporte une ou plusieurs enveloppes entourant l'âme métallique élastique, celle-ci pouvant être par ailleurs réalisée d'une manière différente du ressort hélicoïdal décrit, et notamment sous la forme d'un tube métallique. Dans le même esprit on comprendra que le joint selon l'invention peut présenter en vue de dessus une forme quelconque, c'est-à-dire qu'il peut être aussi bien circulaire que de forme sensiblement carrée, rectangulaire ou autre, sans sortir du cadre de l'invention.

### Revendications

1. Dispositif de raccordement étanche comprenant un joint métallique flexible (22) placé entre deux brides (12) en vis-à-vis reliées par des moyens de serrage (16), le joint (22) comprenant au moins une âme métallique élastique creuse (24, 24a, 24b) présentant une forme annulaire, et au moins une enveloppe (26, 28) dans laquelle est encastrée l'âme métallique, caractérisé en ce que l'âme métallique du joint (22) présente au repos une section ovale dont l'un des axes de symétrie est situé dans le plan de symétrie du joint, les brides (12) présentant au moins deux gorges trapézoïdales (20) en vis-à-vis dans lesquelles le joint (22) est logé de façon à être en contact étanche avec les flancs desdites gorges (20) en quatre zones (A, B, C, D) et à être en butée avec le fond desdites gorges (20) en deux zones (E, F) lorsque lesdits moyens de serrage sont actionnés.

2. Dispositif selon la revendication 1, caractérisé en ce que, avant l'actionnement desdits moyens de serrage (16), ledit joint (22) est espacé du fond de chacune desdites gorges (20) d'une distance (h) comprise entre 0,5 mm et 1 mm.

3. Dispositif selon l'une quelconque des revendications 1 et 2, caractérisé en ce que ledit axe de symétrie situé dans le plan de symétrie du joint est le petit axe de l'ovale formé en section par l'âme métallique du joint.

4. Dispositif selon l'une quelconque des revendications 1 et 2, caractérisé en ce que ledit axe de symétrie situé dans le plan de symétrie du joint est le grand axe de l'ovale formé en section par l'âme métallique du joint.

5. Dispositif selon l'une quelconque des revendications précédentes, caractérisé en ce que le joint (22) comprend de plus un jonc annulaire plein (30) disposé à l'intérieur de l'âme élastique (4).

6. Dispositif selon l'une quelconque des revendications 1 à 5, caractérisé en ce que l'une au moins (26a) des enveloppes du joint (22) se prolonge parallèlement au plan de symétrie du joint pour supporter une deuxième âme élastique (24b) logée dans deux autres gorges en vis-à-vis formées dans les brides (12).

**Patentansprüche**

1. Abdichtungsvorrichtung mit einer flexiblen Metalldichtung (22), die zwischen zwei einander gegenüberliegenden, durch Klemmittel (16) miteinander verbundenen Flanschen (12) angeordnet ist, wobei die Dichtung (22) wenigstens einen elastischen, hohlen Metallkern (24, 24a, 24b) in Ringform und wenigstens einen Mantel (26, 28) umfaßt, in den der Metallkern eingebaut ist, dadurch gekennzeichnet, daß der Metallkern der Dichtung (22) in Ruhe einen ovalen Querschnitt aufweist, dessen eine Symmetrieachse sich in der Symmetrieebene der Dichtung befindet, die Flansche (12) wenigstens zwei sich gegenüberliegende, trapezförmige Nuten (20) aufweist, in denen die Dichtung (22) derart angeordnet ist, daß sie in vier Bereichen (A, B, C, D) in dichter Berührung mit den Flanken der genannten Nuten (20) steht und in zwei Bereichen (E, F) an den Boden der genannten Nuten (20) anstößt, wenn die genannten Klemmittel betätigt sind.

2. Vorrichtung nach Anspruch 1, dadurch gekennzeichnet, daß vor der Betätigung der genannten Klemmittel (16) die genannte Dichtung (22) vom Boden jeder genannten Nuten (20) mit einem Abstand (h) zwischen 0,5 mm und 1 mm beabstandet ist.

3. Vorrichtung nach irgendeinem der Ansprüche 1 oder 2, dadurch gekennzeichnet, daß die genannte, sich in der Symmetrieebene der Dichtung befindende Symmetrieachse die kleine Achse des Ovals ist, welches im Schnitt durch den Metallkern der Dichtung gebildet ist.

4. Vorrichtung nach irgendeinem der Ansprüche 1 oder 2, dadurch gekennzeichnet, daß die sich in der Symmetrieebene der Dichtung befindende Symmetrieachse die große Achse des Ovals ist, welches im Schnitt durch den Metallkern der Dichtung gebildet ist.

5. Vorrichtung nach irgendeinem der vorhergehenden Ansprüche, dadurch gekennzeichnet, daß die Dichtung (22) ferner einen massiven Ring (30) umfaßt, der im Inneren des elastischen Kerns (4) angeordnet ist.

6. Vorrichtung nach irgendeinem der Ansprüche 1 bis 5, dadurch gekennzeichnet, daß sich wenigstens einer (26a) der Mäntel der Dichtung (22) parallel zu der Symmetriebene der Dichtung ausdehnt, um einen zweiten elastischen Kern (24b) zu halten, der in zwei weiteren, einander gegenüberliegenden Nuten angeordnet ist, die in den Flanschen (12) ausgebildet sind.

**Claims**

1. Tight connecting device incorporating a flexible metal joint (22) placed between two facing flanges (12) connected by fastening means (16), the joint (22) comprising at least one annular hollow elastic metal core (24a, 24b, 24) and at least one envelope (26, 28) in which the metal core is embedded, characterized in that the metal core of the joint (22) has an oval cross-section in the rest state, whereof one of the axes of symmetry is located in the plane of symmetry of the joint, the flanges (12) having at least two facing trapezoidal grooves (20), in which the joint (22) is located so as to be in tight contact with the sides of said grooves (20) in four zones (A, B, C, D), whilst abutting with the base of said grooves (22) in two zones (E, F), when the fastening means are actuated.

2. Device according to claim 1, characterized in that prior to the actuation of the fastening means (16), the joint (22) is spaced from the bottom of each of said grooves (20) by a distance (h) between 0.5 and 1 mm.

3. Device according to either of the claims 1 and 2, characterized in that the axis of symmetry located in the plane of symmetry of the joint is the minor axis of the oval formed in section by the metal core of the joint.

4. Device according to either of the claims 1 and 2, characterized in that said axis of symmetry in the plane of symmetry of the joint is the major axis of the oval formed in section by the metal core of the joint.

5. Device according to any one of the preceding claims, characterized in that the joint (22), also comprises a solid annular locking ring (30) arranged within the elastic core (4).

6. Device according to any of the claims 1 to 5, characterized in that at least one (26a) of the envelopes of the joint (22) is extended parallel to the plane of symmetrie thereof, in order to support a second elastic core (24b) placed in two other facing grooves formed in the flanges (12).

FIG. 1

FIG. 2

(a)

29

22    27    24

FIG. 3

(b)

29    27

28    26

22    24

28

22    30

26    24

FIG. 4

122

28a    29a    28b

27b

27a    24b

26a    29b

24a

FIG. 5

A    20    B

12

22    D    18

12    C

20

FIG. 6